# FASCICULE DE BREVET EUROPEEN

(11) **EP 4 115 043 B1**
(45) Date de publication et mention de la délivrance du brevet: **21.10.2026**
(21) Numéro de dépôt: 21708266.8
(22) Date de dépôt: 04.03.2021
(51) Int. Cl.: E06B 9/02

(54) **DISPOSITIF ANTI-INONDATION**
ÜBERSCHWEMMUNGSSCHUTZVORRICHTUNG
ANTI-FLOOD DEVICE

(30) Priorité: 05.03.2020 FR 2002225
(43) Date de publication de la demande: 11.01.2023
(73) Titulaire: FLOWSTOP INDUSTRIE, 66000 Perpignan (FR)
(72) Inventeur: GUILLOU, Olivier, 82003 Montauban (FR)
(74) Mandataire: Grosset-Fournier, Chantal Catherine
(86) Numéro de dépôt international: PCT/EP2021/055485
(87) Numéro de publication internationale: WO 2021/176002

(56) Documents cités:
- EP-A1- 1 564 350
- EP-A2- 0 161 002
- WO-A2-2013/160852
- FR-A1- 2 639 673
- GB-A- 2 353 554
- GB-A- 2 457 647
- JP-B2- 4 542 421
- US-B1- 10 557 239

## Description

La présente demande concerne un dispositif destiné à prévenir l'intrusion d'un flux liquide à l'intérieur d'un bâtiment, notamment dans l'éventualité d'un débordement d'une rivière ou d'un cours d'eau.

En raison principalement de la modification des conditions climatiques, les débordements de cours d'eau ont conduit ces dernières années à de multiples situations d'inondations se traduisant par des dégâts importants.

Pour assurer la mise en sécurité des habitations on a proposé de nombreux dispositifs destinés à obturer les entrées de ces dernières.

Certains de ces dispositifs sont constitués à partir d'éléments rigides, consistant la plupart du temps en des panneaux de bois ou de matières de synthèse, qui sont découpés aux dimensions de l'orifice à obturer et qui comportent sur leurs faces inférieure et latérales un joint d'étanchéité formé d'une bande élastique. L'expérience a montré que la mise en place de tels panneaux était particulièrement difficile et aboutissait à un résultat manquant totalement d'efficacité. Il a ainsi été établi que la force d'application de la bande élastique sur la paroi à étanchéifier était insuffisante en regard de la pression exercée par l'eau sur celle-ci pour assurer une étanchéité correcte.

On a également proposé de faire appel, notamment dans le brevet FR 2.964.999, à des systèmes d'obturation mettant en œuvre des structures porteuses assurant le maintien de moyens d'étanchéité, constitués notamment de parois souples et imperméables telles que des bâches qui sont pourvues à leur partie inférieure de lests solidaires de la bâche pouvant être constitués par des poids ou des sacs étanches remplis d'eau. Outre le fait que de tels dispositifs sont particulièrement complexes et longs à mettre en œuvre, ce qui fait réserver leur mise en fonction à un personnel de professionnels, on notera que leur prix de revient est particulièrement prohibitif et ceci pour une efficacité toute relative.

On a également proposé de réaliser des barrages au moyen de sacs étanches destinés à être empilés dans les ouvertures à obturer et qui doivent être préalablement remplis par l'utilisateur avec du sable des gravats ou de l'eau. Ces dispositifs sont particulièrement bon marché mais ne sont efficaces que face à de simple débordement et non à de véritables crues.

On a proposé dans le brevet européen EP 1 564 350 un système destiné à assurer l'étanchéité d'une ouverture d'un bâtiment contre les inondations qui se compose d'un coussin gonflable par de l'air sous pression qui est de forme globale parallélépipédique et qui est enchâssé dans un cadre qui est lui-même disposé sur la partie externe de l'ouverture que l'on souhaite obturer. Les faces internes antérieure et postérieure de ce coussin sont reliées par des cloisons de séparation qui sont parallèles aux côtés latéraux. On notera qu'une telle constitution ne permet pas d'assurer un maintien interne du coussin qui soit uniforme sur toute sa surface puisqu'un tel maintien s'effectue uniquement dans le sens vertical, avec cette conséquence que, ainsi que précisé dans le brevet, les faces antérieure et postérieure de ce coussin prennent un aspect ondulé.

Le dispositif anti inondation présenté dans le brevet européen EP 0 161 002 fait appel à un tapis obturant constitué d'un coussin gonflable qui est pourvu sur sa périphérie de moyens permettant d'assurer son étanchéité avec les parois de l'ouverture dans laquelle il est disposé. Les parois internes antérieure et postérieure de ce tapis gonflable sont reliées par des éléments support qui sont disposés dans le sens horizontal et le sens vertical, si bien que le tapis obturant se présente sous la forme d'une sorte de matrice de ballons qui, en fonction de leur gonflage sont plus ou moins bombés, si bien que le tapis gonflable formé par cette matrice de ballons ne permet pas de constituer un panneau dont les surfaces opposées sont planes et dont on peut maintenir entre elles un écartement constant.

Il en est de même du brevet japonais JP 4 542 421 qui décrit une barrière anti inondation qui est constituée d'une série de réservoirs allongés adjacents qui sont remplis d'eau et qui sont agencés de façon que leur axe longitudinal soit disposé horizontalement. Chacun de ces réservoirs est fixé au réservoir adjacent par un fil de renfort qui s'étend dans une direction latérale perpendiculaire à la direction dans laquelle le réservoir fait saillie.

On connaît également par le brevet FR 2 639 673 un dispositif anti inondation constitué d'un panneau gonflable réalisé à partir d'une ou plusieurs chambres formant des boudins qui sont disposés côte-à-côte de façon à obturer l'ouverture à protéger. Ces boudins sont réunis entre eux par une paroi possédant des éléments de fixation qui les traversent à l'intérieur de goussets. Un tel dispositif, ainsi que le précédent ne permet pas non plus de constituer un panneau gonflable présentant des surfaces opposées uniformes et dont on peut maintenir constant l'écartement en tout point.

La présente demande a pour but de proposer un dispositif anti-inondation faisant appel à un panneau, qui soit d'une constitution simple et en conséquence bon marché et qui, de plus, soit rapide, facile à mettre en œuvre et réutilisable. Le panneau de ce dispositif anti-inondation devra être rigide, présenter deux faces principales planes maintenues à un écartement contrôlé de façon à ne subir aucune déformation lors du gonflage.

La présente invention a ainsi pour objet un dispositif anti-inondation destiné à assurer l'obturation d'une ouverture (3), notamment d'un bâtiment, comprenant au moins un panneau parallélépipédique (1, 1') formant une enceinte gonflable par injection d'un gaz, comprenant deux parois principales rectangulaires (5a) réunies par un chant inférieur (5c) un chant supérieur (5d) et deux chants latéraux (5b), dans lequel :
- les faces internes des parois principales (5a) du panneau (1, 1') sont reliées entre elles, au moins sur une partie de leur surface, par des éléments de liaison de même longueur (l) dont les extrémités sont respectivement solidarisées des parois principales (5a) et qui assurent leur maintien parallèle lorsque le panneau (1, 1') est gonflé,
- les chants latéraux (5b) et inférieur (5c) du panneau (1) sont pourvus, au moins en partie, d'un joint d'étanchéité déformable élastique (14) qui est destiné à être comprimé contre respectivement les parois latérales (18) de l'ouverture (3) et la base (16) de celle-ci lorsque le panneau (1, 1') est gonflé et en place dans cette ouverture,
caractérisé en ce que les éléments de liaison sont constitués de fils de maintien (7) et en ce que la base du panneau (1) comprend une densité de distribution des fils de maintien (7) inférieure à la densité de distribution dans le reste du panneau, en particulier, ladite base ne comprend pas de fils de maintien (7) sur une hauteur k comprise entre cinq et vingt centimètres.

Ces fils de maintien pourront être formés d'au moins un faisceau de fils élémentaires.

Préférentiellement la résistance à la traction des fils de maintien sera supérieure à la force de traction exercée sur ces derniers par les faces principales du panneau sous l'effet de la pression de gonflage.

Les parois principales du panneau pourront être constituées d'une toile sur laquelle seront fixés les fils de maintien, au moins une face de cette toile étant recouverte extérieurement d'un revêtement étanche.

Les parois principales du panneau pourront être réunies par une bordure en un matériau souple et étanche formant les chants de celui-ci.

Préférentiellement cette bordure sera réalisée en deux parties, à savoir une partie de bordure formant le chant inférieur du panneau et une partie de bordure formant les chants latéraux et le chant supérieur de celui-ci.

Dans un mode de mise en œuvre particulièrement intéressant de l'invention les angles inférieurs du panneau formés par la partie de bordure constituant le chant inférieur avec les parties de bordure constituant respectivement les chants latéraux de celui-ci seront des angles droits.

Pour ce faire, la partie de bordure formant le chant inférieur du panneau et les parties de bordure formant les chants latéraux pourront se terminer jointivement en « coupe d'onglet » en formant chacune un angle égal à 45° qui sera ouvert sur l'intérieur.

Le joint d'étanchéité est réalisé en trois parties, à savoir un élément de joint inférieur qui pourra être fixé sur le chant inférieur du panneau et deux éléments de joint latéraux qui pourront être fixés sur les chants latéraux, ces éléments de joint se terminant jointivement en « coupe d'onglet » en formant chacun un angle égal à 45° qui est ouvert sur l'intérieur. Il pourra être constitué de caoutchouc naturel ou de caoutchouc de synthèse et notamment d'éthylène-propylène-diène monomère (EPDM).

La section droite du joint d'étanchéité a la forme d'au moins un trapèze isocèle qui sera fixé par sa grande base sur les chants latéraux et inférieur du panneau. Il pourra également avoir la forme de deux trapèzes isocèles disposés côte à côte jointivement en réservant entre leurs sommets respectifs un volume.

Le volume interne du joint d'étanchéité pourra être creusé d'une cavité.

Le dispositif anti-inondation suivant l'invention comprend au moins deux panneaux disposés de façon adjacente et coplanaire qui pourront être séparés par un élément profilé vertical à section droite en forme de « I », les chants latéraux adjacents de ces panneaux étant logés entre deux ailes respectives de ce profilé de façon que leurs éléments de joint latéraux respectifs se trouvent en appui contre l'âme du profilé, lorsque les panneaux sont gonflés et en place dans l'ouverture à obturer.

Le dispositif anti-inondation comprend un élément profilé à section droite en forme de « U » dont l'écartement des ailes pourra être tel que ces dernières pourront être appliquées contre la partie supérieure des panneaux.

La base du panneau reçoit au moins une nappe en matière souple qui pourra comporter une première partie solidaire d'une face principale du panneau qui se prolongera extérieurement à celui-ci par une seconde partie destinée à être appliquée sur le sol.

Dans le cas où le panneau ne comprend pas de fils de maintien, cette base est remplie de liquide, notamment de l'eau.

On décrira ci-après, à titre d'exemple non limitatif, des formes d'exécution de la présente demande, en référence au dessin annexé sur lequel :
[Fig. 1] est une vue en plan d'un mode de mise en œuvre d'un panneau anti-inondation suivant la présente demande,
[Fig. 2] est une vue de gauche du panneau anti-inondation représenté sur la figure 1,
[Fig. 3] est une vue de dessous du panneau anti-inondation représenté sur les figures 1 et 2,
[Fig. 4] est une vue en perspective et coupe partielle transversale d'un premier mode de mise en œuvre de l'intérieur du panneau anti-inondation,
[Fig. 5] est une vue en coupe partielle du panneau anti-inondation suivant la ligne V-V de la figure 1,
[Fig. 6a] et [Fig. 6b] sont des vues en plan partielles de deux modes de réalisation d'un angle inférieur du panneau anti-inondation,
[Fig. 7a] et [Fig. 7b] sont des vues en coupe transversales de deux variantes de réalisation d'un joint d'étanchéité du panneau anti-inondation,
[Fig. 7c] et [Fig. 7d] sont des vues en coupe transversales de deux autres variantes de réalisation d'un joint d'étanchéité du panneau anti-inondation,
[Fig. 8] est une vue en plan partielle d'un mode de réalisation d'un angle inférieur du panneau anti-inondation une fois posé un joint d'étanchéité,
[Fig. 9] est une vue en plan d'un panneau anti-inondation mis en place dans une ouverture à obturer,
[Fig. 10] et [Fig. 11] sont des vue partielles en perspective respectivement d'un profilé en « I » et d'un profilé en « U » mis en œuvre dans une variante de mise en œuvre de la demande représentée sur les figures 12 et 13,
[Fig. 12] est une vue en plan d'un mode de mise en œuvre associant deux panneaux anti-inondation,
[Fig. 13] est une vue de dessus partielle du dispositif représenté sur la figure 12,
[Fig. 14] est une vue du profil des pressions exercées sur un panneau suivant la demande de 1m de hauteur par un courant d'eau frontal se déplaçant à une vitesse de 1m/s,
[Fig. 15] est une vue schématique en perspective d'une variante de réalisation destinée à favoriser la mise en place d'un panneau.
[Fig. 16a] et [Fig. 16b] sont des vues partielles transversales de deux variantes de la base d'un panneau suivant la demande.

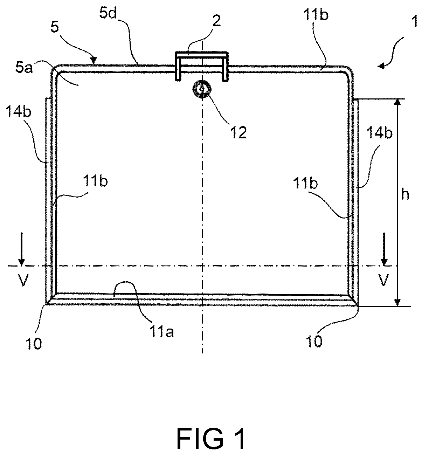

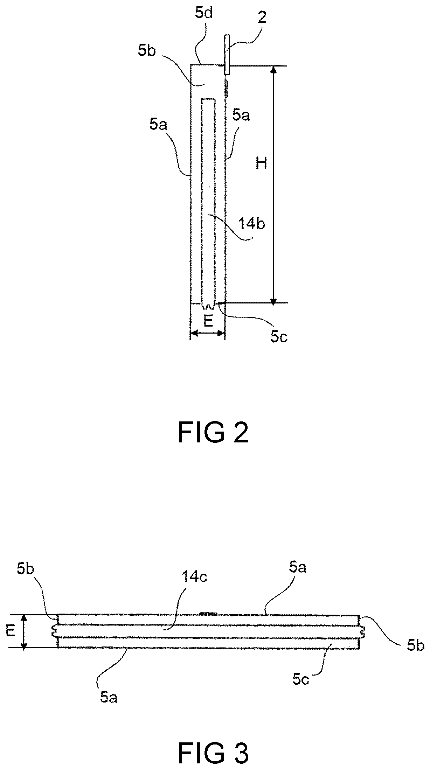

On a représenté sur les figures 1 à 5 un dispositif anti-inondation suivant la demande qui est essentiellement constitué d'un panneau gonflable 1 qui est destiné à être disposé dans une ouverture 3 d'un bâtiment afin de l'obturer. Afin de faciliter la mise en position de ce panneau, celui-ci peut être pourvu, ainsi que représenté sur la figure 1, d'une poignée 2.

Plus précisément ce panneau gonflable est constitué d'une enveloppe 5 comportant deux parois principales opposées rectangulaires 5a qui sont réunies par deux chants latéraux 5b, un chant inférieur 5c et un chant supérieur 5d.

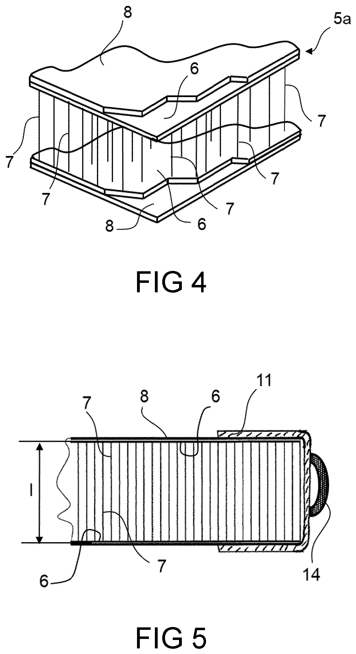

Ainsi que représenté sur les figures 4 et 5 les deux parois principales 5a du panneau 1 sont constituées d'une toile 6 dont les surfaces internes sont réunies entre elles par une multitude de fils de maintien résistants 7 de même longueur l, qui définissent l'épaisseur E du panneau 1 lorsque celui-ci sera gonflé, ainsi qu'expliqué ci-après.

Dans un mode de mise en œuvre de la demande chacun des fils de maintien 7 est formé d'un faisceau de fibres élémentaires qui sont associées à leurs extrémités c'est-à-dire là où ces fibres sont fixées sur la toile 6.

Ainsi que représenté sur la figure 4, cette toile 6 est recouverte, au moins sur sa face constituant la face externe du panneau, d'un revêtement étanche 8, constitué par exemple de polyuréthane, de polychlorure de vinyle (PVC), ou d'un caoutchouc imperméable, qui est fixé sur la toile 6 par exemple par collage, thermocollage, ou par des moyens de soudure, notamment des moyens de soudure haute fréquence.

Les deux parois principales 5a du panneau 1 sont réunies sur toute leur périphérie par une bordure 11 réalisée en un matériau souple et étanche, tel que notamment du polyuréthane, qui forme ainsi les chants du panneau, à savoir les chants latéraux 5b ainsi que les chants inférieur 5c et supérieur 5d. Cette bordure sera par exemple fixée par collage, par thermocollage ou, comme précédemment, par soudure haute fréquence.

Suivant un mode de mise en œuvre de la demande, on fera en sorte, lors de la mise en place de cette bordure, que les angles 10 formés par chaque chant latéral 5b avec le chant inférieur 5c, et dits ci-après « angles de base » du panneau, soient réalisés aussi proches que possible d'une valeur de 90°.

Une telle disposition permet d'améliorer grandement les qualités d'étanchéité du panneau suivant la demande par rapport aux panneaux gonflables de l'état antérieur de la technique. En effet une étude réalisée par la demanderesse a établi que la pression d'eau exercée sur un panneau était maximale dans les angles inférieurs de celui-ci.

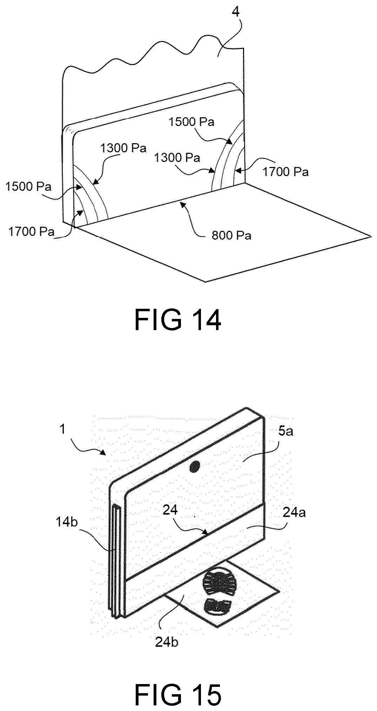

Plus précisément on a relevé le profil des pressions, représenté sur la figure 14, qui sont exercées sur un panneau en appui sur un plan 4 par un flux d'eau frontal dont le niveau est de 1 mètre et qui se déplace à une vitesse de 1m/s. On a ainsi relevé dans les angles inférieurs 10 du panneau une pression d'environ 1700 Pa, pour une pression au centre de la base du panneau de 800 Pa. On comprend dans ces conditions que le panneau suivant la demande sera d'autant plus efficace qu'il sera en mesure de contenir l'eau dans ses angles de base 10.

Pour ce faire on fait en sorte que ces angles du panneau soient les plus proches possibles de 90° et, ainsi qu'expliqué ci-après, on intervient d'une part au niveau du chant inférieur du panneau lui-même et d'autre part au niveau du joint d'étanchéité qui sera disposé sur celui-ci ainsi qu'expliqué ci-après.

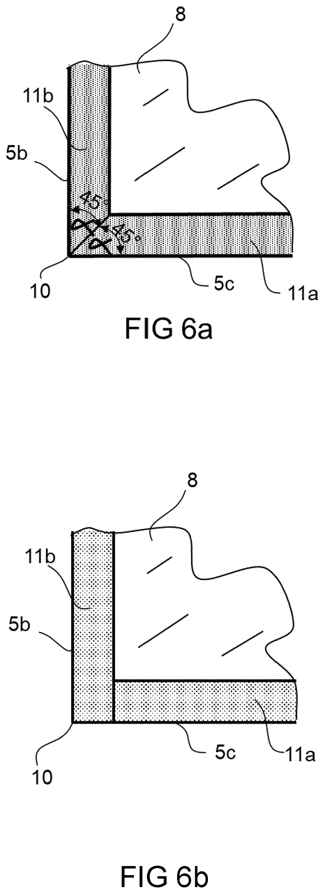

La bordure 11 qui est disposée sur la périphérie des parois principales 5a forme avec ces dernières une enceinte fermée. Afin de réaliser des angles de base 10 qui soient à 90° cette bordure est réalisée en deux éléments distincts, à savoir une première bordure 11a qui forme le chant inférieur 5c et une seconde bordure 11b qui forme à la fois les deux chants latéraux 5b et le chant supérieur 5d. Ces bordures, ainsi que représenté sur la figure 6a, se terminent « en coupe d'onglet » c'est-à-dire en formant un angle α égal à 45° qui est ouvert sur l'intérieur.

Elles peuvent également se terminer, ainsi que représenté sur la figure 6b, par deux coupes droites qui se rejoignent dans les angles 10.

Un tel mode de mise en œuvre est particulièrement intéressant en ce qu'il permet d'assurer une étanchéité efficace au niveau des angles inférieurs 10 du panneau entre celui-ci et d'une part le sol 16 et d'autre part les parois latérales 18 de l'ouverture 3 que l'on souhaite occulter ainsi qu'expliqué ci-après.

On obtient ainsi une enceinte étanche que l'on peut gonfler et dégonfler en fonction des besoins. A cet effet l'une des parois principales 5a du panneau est pourvue d'une valve 12 qui est préférentiellement disposée dans la partie supérieure de celle-ci.

Les chants latéraux 5b ainsi que le chant inférieur 5c du panneau 1 reçoivent un joint 14 qui est destiné à assurer l'étanchéité de celui-ci avec les parois latérales 18, telles que les murs du bâtiment à préserver, et le sol 16 de ce dernier.

Ce joint est constitué d'une bande d'un matériau déformable et élastique tel que notamment constitué de caoutchouc naturel ou de caoutchouc de synthèse notamment d'éthylène-propylène-diène monomère généralement désigné sous l'acronyme « EPDM ». On choisira préférentiellement un tel élastomère possédant une dureté shore A comprise entre 40 et 80 et possédant une résistance élastique à la rupture comprise entre 13 MPa et 25 MPa.

Ce joint est fixé par exemple par collage d'une part sur les chants latéraux 5b et d'autre part sur le chant inférieur 5c du panneau 1. La hauteur h du joint disposé sur les chants latéraux 5c définit la hauteur maximale du niveau d'eau dont on souhaite se protéger. Ainsi cette hauteur h pourra être, en fonction des besoins, égale ou inférieure à la hauteur H du panneau 1.

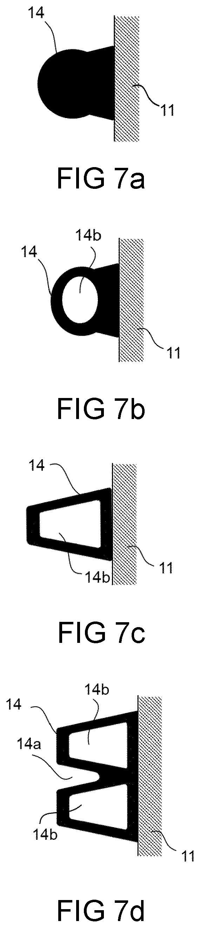

Ce joint 14 peut être formé d'un joint plein tel que représenté sur la figure 7a ou d'un joint pourvu d'une cavité 14b tel que représenté sur la figure 7b, le joint creux permettant au concepteur de disposer pour un même matériau de base et en fonction des besoins et de la conformité de l'état de surface du sol et des parois latérales de l'ouverture, d'une capacité de déformation améliorée.

Ce joint d'étanchéité pourra avoir une section droite arrondie ainsi que représenté sur les figures 7a et 7b, ou une forme de trapèze isocèle, ainsi que représenté sur les figures 7c et 7d, dont la grande base sera fixée sur un chant du panneau.

Par ailleurs, la section droite de ce joint pourra être formée, ainsi que représenté sur la figure 7d, de deux trapèzes isocèles disposés jointivement et côte à côte en réservant entre leurs sommets respectifs un volume 14a destiné à former un effet ventouse lorsque le joint est plaqué contre une surface à étanchéifier ainsi qu'expliqué ci-après.

Cette dernière forme de mise en œuvre s'est révélée particulièrement intéressante en ce que son efficacité est grandement améliorée en raison d'un phénomène de succion qui se manifeste lorsque ce joint, après avoir été fortement comprimé contre une paroi, est soumis à un effort de retrait.

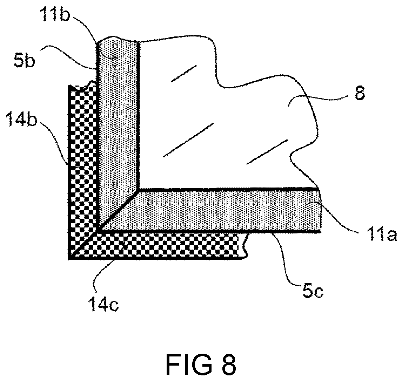

Afin de respecter l'intégrité des angles à 90° à la base du panneau, le joint 14 peut être découpé en trois éléments, à savoir un élément de joint inférieur 14c fixé sur le chant inférieur 5c et deux éléments de joint latéraux 14b respectivement fixés sur les chants latéraux 5b. Ces éléments de joint seront assemblés en « coupe d'onglet » et, à cet effet, les extrémités de l'élément de joint inférieur 14c seront découpés à 45° de même que les extrémités inférieures des joints latéraux 14b, ainsi que représenté sur la figure 8.

Lorsqu'il n'est pas gonflé le panneau peut être roulé sur lui-même ou plié ce qui lui procure un volume de stockage particulièrement réduit, ce qui se montre particulièrement intéressant en ce qui concerne son transport.

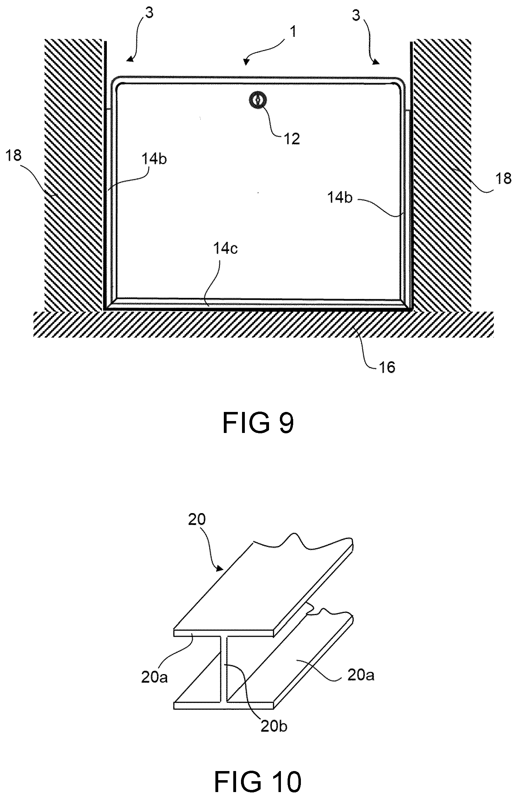

La mise en fonction du panneau anti-inondation se fait de façon simple sans qu'il soit nécessaire de faire appel à une opération de génie civil quelconque. Pour ce faire on dispose ce dernier dans l'ouverture 3 que l'on souhaite obturer, par exemple une porte ainsi que représenté sur la figure 9, l'élément de joint inférieur 14c étant mis en contact avec le sol 16 et les deux joints latéraux 14b étant mis en contact avec les parois latérales 18 de l'ouverture 3. Puis on gonfle le panneau en connectant la valve 12 à des moyens de soufflage, tels que par exemple une simple pompe à main, en mesure d'injecter dans le panneau un gaz sous pression, et notamment de l'air, de façon à porter le volume interne du panneau à une pression notamment comprise entre 10⁵ Pa et 1,5.10⁵Pa.

Sous l'effet de la pression la largeur et la hauteur du panneau augmentent et les joints latéraux et inférieurs se trouvent alors fortement pressés contre les encadrements de l'ouverture à obturer. Par ailleurs, sous l'effet de la pression, les parois principales opposées 5a assurent la tension des fils 7 et le panneau prend alors l'épaisseur déterminée par la longueur l de ces derniers, les deux parois principales 5a restant parallèles entre elles ce qui évite toute déformation du panneau dans le sens de l'épaisseur.

Une telle disposition permet ainsi de gonfler le panneau 1 avec un gaz sous une pression importante et de le rigidifier sans que celui-ci se trouve soumis à une déformation qui rendrait bombées ses faces principales 5a, ainsi qu'il en est dans les panneaux gonflables suivant l'état antérieur de la technique. Un tel maintien des faces principales 5a par les fils 7 permet de conférer au panneau une grande rigidité, rigidité qui se traduit par une meilleure compression des joints 14 et donc une meilleure adaptabilité de ces derniers aux états de surface contre lesquels ils sont appliqués, ce qui se traduit par une meilleure étanchéité du dispositif.

Suivant la demande il est possible d'associer entre eux plusieurs panneaux, qui sont ou non de mêmes dimensions, lorsque la largeur de l'ouverture que l'on souhaite obturer est importante, par exemple dans le cas d'une ouverture formée par une porte de garage.

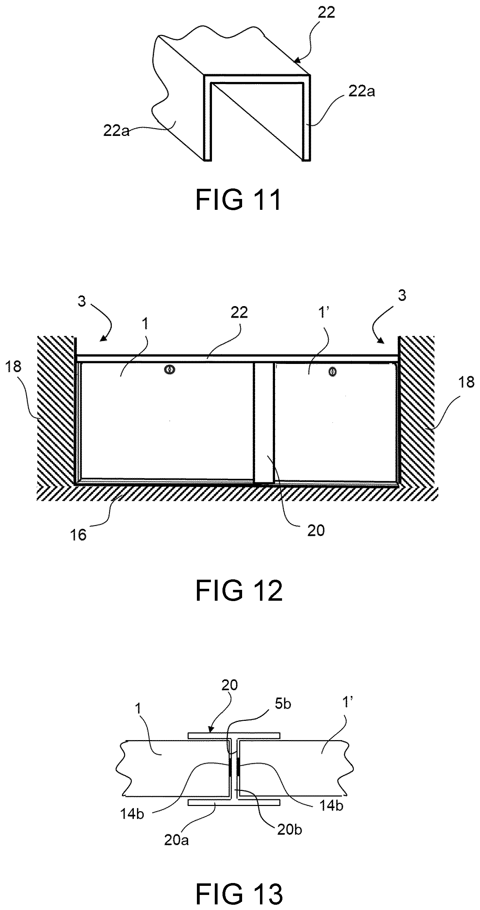

On a représenté sur la figure 12 l'association de deux panneaux 1, 1', mais on pourrait bien entendu suivant la demande faire appel à l'association d'un nombre plus important de panneaux.

Pour ce faire on dispose les deux panneaux 1 et 1' dans le prolongement l'un de l'autre de façon coplanaire en travers de l'ouverture 3 et on introduit verticalement entre ces deux panneaux un profilé, préférentiellement un profilé métallique 20, dont la section droite est en forme de l, ainsi que représenté sur la figure 10. Les chants latéraux 5b adjacents de ces deux panneaux 1 et 1' sont respectivement introduits entre deux ailes 20a du profilé 20 de façon que, ainsi que représenté sur la figure 13, leurs joints latéraux 14b se trouvent pressés, lorsque les panneaux sont gonflés, contre l'âme 20b du profilé.

De façon à sécuriser le maintien en bonne cohésion de ces deux panneaux 1, 1', on coiffe leur partie supérieure d'un profilé 22 à section droite en « U », représenté sur la figure 11, dont l'écartement des ailes 22a est tel que ces dernières se trouvent appliquées contre la partie supérieure des panneaux.

Dans un mode de mise en œuvre de la demande qui est représenté sur la figure 15 on a disposé à la base de l'une des faces principales 5a, préférentiellement la face interne, c'est-à-dire sur la face opposée à celle soumise à l'action de l'eau, une nappe en matière souple 24 qui comprend une première partie 24a qui est solidarisée de la face principale 5a et qui se prolonge extérieurement au panneau par une seconde partie 24b, qui peut être de moindre largeur, et qui est destinée à être appliquée sur le sol 16.

Cette disposition est destinée à faciliter à l'utilisateur une bonne mise en place du panneau. A cet effet celui-ci posera un pied sur la partie 24b ce qui aura pour effet de plaquer le joint inférieur 14c disposé sur le chant inférieur 5c du panneau contre le sol 16 où il pourra ainsi le maintenir facilement pendant qu'il procédera à la phase de gonflage du panneau.

Les panneaux peuvent être réalisés en toutes dimensions, que ces dimensions soient de type standard ou non. Préférentiellement la hauteur sera de 1m, dans la mesure où il est fortement recommandé de ne pas dépasser cette valeur pour des raisons de sécurité liées à la structure des bâtiments que l'on souhaite protéger.

La présente demande permet au concepteur de réaliser facilement, à la commande, des panneaux de la largeur souhaitée par les utilisateurs. Il pourra également produire des panneaux dont la largeur sera voisine des valeurs standard des ouvertures le plus souvent concernées, telles que notamment les portes des bâtiments, tout en lui permettant de prévoir une gamme de largeurs différentes les unes des autres de la valeur d'un pas qui sera par exemple voisin de la valeur de l'augmentation en largeur du panneau au cours de l'opération de gonflage et qui, statistiquement, est de l'ordre de 7cm.

Il sera ainsi possible à l'utilisateur, sous réserve qu'il dispose de plusieurs modèles, de balayer des largeurs très différentes dans la mesure où, ainsi que représenté sur la figure 12, il peut additionner et combiner des panneaux de largeurs différentes.

La présente demande est particulièrement intéressante en ce que :
- le dispositif anti-inondation est de type pliable une fois l'intervention terminée, ce qui permet à l'utilisateur de procéder facilement à son rangement,
- il ne nécessite pour sa mise en fonction aucun travail de génie civil,
- le panneau ne se déforme pas lors du gonflage ce qui lui confère un excellente rigidité, rigidité qui lui permet d'appliquer au joint d'étanchéité dont il est pourvu des pressions en mesure d'assurer une étanchéité efficace,
- la forme spécifique du panneau lui permet de réaliser une bonne étanchéité dans les angles situés à sa base,
- il permet de combiner plusieurs panneaux, notamment de dimensions différentes.

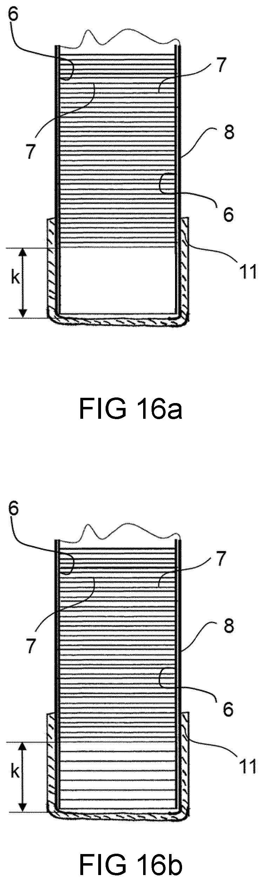

Dans un mode de mise en œuvre intéressant de la présente invention, représenté schématiquement sur la figure 16a, il pourra être intéressant de ne pas disposer les fils de maintien 7 sur la totalité du volume du panneau afin de réserver, à la base de ce dernier, une zone d'une hauteur k dépourvue de fils de maintien 7, par exemple de l'ordre d'une dizaine de centimètres. On confère ainsi à cette zone de hauteur k une moins grande rigidité. Une telle disposition permet ainsi à la base du panneau de posséder une plus grande souplesse ce qui lui permet de se déformer plus facilement afin de s'adapter aux irrégularités éventuelles du sol sur lequel il prend appui ce qui améliore ainsi l'étanchéité de contact.

Cette forme de mise en œuvre est intéressante en ce qu'elle permet d'introduire dans le volume interne du panneau libéré par l'absence des fils de maintien un volume de liquide, notamment de l'eau. Le poids de celle-ci et la pression de l'air de gonflage qui s'appliquent sur ce volume d'eau ont pour effet d'appliquer avec force la base du panneau contre le sol et le gain d'étanchéité ainsi obtenu est d'autant plus efficace que la base du panneau a été rendue plus souple par la suppression des fils de maintien dans cette zone.

On peut suivant l'invention jouer sur la densité de distribution des fils de maintien, c'est-à-dire sur le nombre de fils utilisés sur une même surface des faces principales 5a du panneau. On peut ainsi et comme représenté sur la figure 16b, réaliser la base du panneau, sur une hauteur k, avec une densité de distribution des fils de maintien 7 inférieure à celle du reste du panneau, ce qui permet de conférer à la base de ce dernier une souplesse juste suffisante pour lui assurer une bonne déformabilité en fonction de l'état de surface du sol sur lequel il est destiné à reposer et de la rigidité que l'on souhaite maintenir pour cette zone.

On pourrait également procéder de même bien entendu pour l'un ou pour les deux côtés latéraux verticaux du panneau.

On pourrait également réaliser une densité de distribution qui serait progressive.

La présente demande permet ainsi à l'utilisateur de contrôler les paramètres de déformabilité et de rigidité de la base et/ou des côtés latéraux du panneau.

Bien entendu si le présent dispositif peut être utilisé pour empêcher l'entrée d'un liquide dans une enceinte, il l'est également pour empêcher la sortie de celui-ci.

## Revendications

1. Dispositif anti-inondation destiné à assurer l'obturation d'une ouverture (3), notamment d'un bâtiment, comprenant au moins un panneau parallélépipédique (1, 1') formant une enceinte gonflable par injection d'un gaz, comprenant deux parois principales rectangulaires (5a) réunies par un chant inférieur (5c) un chant supérieur (5d) et deux chants latéraux (5b), dans lequel :
- les faces internes des parois principales (5a) du panneau (1, 1') sont reliées entre elles, au moins sur une partie de leur surface, par des éléments de liaison de même longueur (l) dont les extrémités sont respectivement solidarisées des parois principales (5a) et qui assurent leur maintien parallèle lorsque le panneau (1, 1') est gonflé,
- les chants latéraux (5b) et inférieur (5c) du panneau (1) sont pourvus, au moins en partie, d'un joint d'étanchéité déformable élastique (14) qui est destiné à être comprimé contre respectivement les parois latérales (18) de l'ouverture (3) et la base (16) de celle-ci lorsque le panneau (1, 1') est gonflé et en place dans cette ouverture,
**caractérisé en ce que** les éléments de liaison sont constitués de fils de maintien (7) et **en ce que** la base du panneau (1) comprend une densité de distribution des fils de maintien (7) inférieure à la densité de distribution dans le reste du panneau, en particulier, ladite base ne comprend pas de fils de maintien (7) sur une hauteur k comprise entre cinq et vingt centimètres.

2. Dispositif anti-inondation suivant la revendication 1 **caractérisé en ce que** les fils de maintien (7) sont formés d'au moins un faisceau de fils élémentaires.

3. Dispositif anti-inondation suivant l'une des revendications 1 ou 2 **caractérisé en ce que** la résistance à la traction des fils de maintien (7) est supérieure à la force de traction exercée sur ces derniers par les faces principales (5a) sous l'effet de la pression de gonflage.

4. Dispositif anti-inondation suivant l'une quelconque des revendications précédentes **caractérisé en ce que** les parois principales (5a) du panneau (1) sont constituées d'une toile (6) sur laquelle sont fixés les fils de maintien (7), au moins une face de cette toile (6) étant recouverte extérieurement d'un revêtement étanche (8).

5. Dispositif anti-inondation suivant l'une quelconque des revendications précédentes **caractérisé en ce que** les parois principales (5a) du panneau (1) sont réunies par une bordure (11) en un matériau souple et étanche formant les chants de celui-ci.

6. Dispositif anti-inondation suivant la revendication 5 **caractérisé en ce que** la bordure (11) est réalisée en deux parties, à savoir une partie de bordure (11a) formant le chant inférieur (5c) du panneau et une partie de bordure (11b) formant les chants latéraux (5b) et le chant supérieur (5d) de celui-ci.

7. Dispositif anti-inondation suivant la revendication 6 **caractérisé en ce que** les angles inférieurs (10) du panneau (1) formés par la partie de bordure (11a) formant le chant inférieur (5c) avec les parties de bordure (11b) formant respectivement les chants latéraux (5b) de celui-ci sont des angles droits.

8. Dispositif anti-inondation suivant la revendication 7 **caractérisé en ce que** la partie de bordure (11a) formant le chant inférieur (5c) du panneau et les parties de bordure (11b) formant les chants latéraux (5b) se terminent jointivement en « coupe d'onglet » en formant chacune un angle (α) égal à 45° qui est ouvert sur l'intérieur.

9. Dispositif anti-inondation suivant l'une quelconque des revendications précédentes **caractérisé en ce que** le joint d'étanchéité (14) est réalisé en trois parties, à savoir un élément de joint inférieur (14c) qui est fixé sur le chant inférieur (5c) du panneau et deux éléments de joint latéraux (14b) qui sont fixés sur les chants latéraux (5b), ces éléments de joint se terminant jointivement en « coupe d'onglet » en formant chacun un angle (α) égal à 45° qui est ouvert sur l'intérieur.

10. Dispositif anti-inondation suivant l'une quelconque des revendications précédentes **caractérisé en ce que** le joint d'étanchéité (14) est constitué de caoutchouc naturel ou de caoutchouc de synthèse et notamment d'éthylène-propylène-diène monomère (EPDM).

11. Dispositif anti-inondation suivant la revendication 1 **caractérisé en ce que** la section droite du joint d'étanchéité (14) est formée de deux trapèzes isocèles disposés côte à côte jointivement en réservant entre leurs sommets respectifs un volume (14a).

12. Dispositif anti-inondation suivant l'une quelconque des revendications précédentes **caractérisé en ce qu'**il comprend au moins deux panneaux (1, 1') disposés de façon adjacente et coplanaire qui sont séparés par un élément profilé vertical (20) à section droite en forme de « I » les chants latéraux (5b) adjacents de ces panneaux (1, 1') étant logés entre deux ailes respectives (20a) de l'élément profilé (20) de façon que leurs éléments de joint latéraux respectifs (14b) soient appliqués contre l'âme (20b) dudit élément profilé (20), lorsque les panneaux (1, 1') sont gonflés et en place dans l'ouverture (3) à obturer.

13. Dispositif anti-inondation suivant la revendication 14 **caractérisé en ce qu'**il comprend un élément profilé (22) à section droite en forme de « U » dont l'écartement des ailes (22a) est tel que ces dernières soient appliquées contre la partie supérieure des panneaux (1, 1').

14. Dispositif anti-inondation suivant l'une quelconque des revendications précédentes **caractérisé en ce que** la base du panneau (1) reçoit au moins une nappe en matière souple (24) qui comporte une première partie (24a) solidaire d'une face principale (5a) du panneau qui se prolonge extérieurement à celui-ci par une seconde partie (24b) destinée à être appliquée sur le sol (16), et **en ce que**, lorsque la base du panneau ne comprend pas de fils de maintien (7), ladite base du panneau est remplie de liquide, notamment de l'eau.

## Patentansprüche

1. Überschwemmungsschutzvorrichtung, die dazu bestimmt ist, das Verschließen einer Öffnung (3), insbesondere eines Gebäudes, sicherzustellen, die mindestens eine parallelepipedische Tafel (1, 1') umfasst, die einen durch Einspritzen eines Gases aufblasbaren Einschluss bildet, der zwei rechteckige Hauptwände (5a) umfasst, die durch eine Unterkante (5c), eine Oberkante (5d) und zwei Seitenkanten (5b) vereint sind, wobei:
- die Innenflächen der Hauptwände (5a) der Tafel (1, 1') miteinander mindestens auf einem Teil ihrer Oberfläche durch Verbindungselemente mit gleicher Länge (l) verbunden sind, deren Enden jeweils fest mit den Hauptwänden (5a) verbunden sind und die ihr Parallelhalten sicherstellen, wenn die Tafel (1, 1') aufgeblasen ist;
- die Seitenkanten (5b) und die Unterkante (5c) der Tafel (1) mindestens zum Teil mit einer elastisch verformbaren Dichtung (14) versehen sind, die dazu bestimmt ist, gegen jeweils die Seitenwände (18) der Öffnung (3) und die Basis (16) dieser komprimiert zu werden, wenn die Tafel (1, 1') aufgeblasen und in dieser Öffnung an Ort und Stelle ist,
**dadurch gekennzeichnet, dass** die Verbindungselemente aus Haltefäden (7) bestehen und dass die Basis der Tafel (1) eine Verteilungsdichte der Haltefäden (7) umfasst, die kleiner ist als die Verteilungsdichte im Rest der Tafel, wobei insbesondere die Basis keine Haltefäden (7) auf einer Höhe k zwischen fünf und zwanzig Zentimetern umfasst.

2. Überschwemmungsschutzvorrichtung nach Anspruch 1, **dadurch gekennzeichnet, dass** die Haltefäden (7) mindestens aus einem Bündel elementarer Fäden gebildet sind.

3. Überschwemmungsschutzvorrichtung nach einem der Ansprüche 1 oder 2, **dadurch gekennzeichnet, dass** die Zugfestigkeit der Haltefäden (7) größer ist als die Zugkraft, die auf Letztere durch die Hauptflächen (5a) unter der Einwirkung des Aufblasdrucks ausgeübt wird.

4. Überschwemmungsschutzvorrichtung nach einem der vorstehenden Ansprüche, **dadurch gekennzeichnet, dass** die Hauptwände (5a) der Tafel (1) aus einem Tuch (6) bestehen, auf dem die Haltefäden (7) befestigt sind, wobei mindestens eine Seite dieses Tuchs (6) außen mit einer dichten Beschichtung (8) bedeckt ist.

5. Überschwemmungsschutzvorrichtung nach einem der vorstehenden Ansprüche, **dadurch gekennzeichnet, dass** die Hauptwände (5a) der Tafel (1) durch eine Umrandung (11) aus einem geschmeidigen und dichten Material, das deren Kanten bildet, vereint sind.

6. Überschwemmungsschutzvorrichtung nach Anspruch 5, **dadurch gekennzeichnet, dass** die Umrandung (11) aus zwei Teilen hergestellt ist, nämlich einem Umrandungsteil (11a), der die Unterkante (5c) der Tafel bildet, und einem Umrandungsteil (11b), der deren Seitenkanten (5b) und Oberkante (5d) bildet.

7. Überschwemmungsschutzvorrichtung nach Anspruch 6, **dadurch gekennzeichnet, dass** die unteren Ecken (10) der Tafel (1), die durch den Umrandungsteil (11a), der die untere Schmalseite (5c) bildet, und die Umrandungsteile (11b), die jeweils die Seitenkanten (5b) derselben bilden, gebildet sind, rechte Winkel sind.

8. Überschwemmungsschutzvorrichtung nach Anspruch 7, **dadurch gekennzeichnet, dass** der Umrandungsteil (11a), der die Unterkante (5c) der Tafel bildet, und die Umrandungsteile (11b), die die Seitenkanten (5b) bilden, aneinanderstoßend in einer "Gehrungsverbindung" abschließen und jeweils einen Winkel (α) von 45° bilden, der nach innen offen ist.

9. Überschwemmungsschutzvorrichtung nach einem der vorstehenden Ansprüche, **dadurch gekennzeichnet, dass** die Dichtung (14) aus drei Teilen hergestellt ist, nämlich aus einem unteren Dichtungselement (14c), das an der Unterkante (5c) der Tafel befestigt ist, und aus zwei seitlichen Abdichtungselementen (14b), die an den Seitenkanten (5b) befestigt sind, wobei die Dichtungselemente aneinanderstoßend in einer "Gehrungsverbindung" abschließen und jeweils einen Winkel (α) von 45° bilden, der nach innen offen ist.

10. Überschwemmungsschutzvorrichtung nach einem der vorstehenden Ansprüche, **dadurch gekennzeichnet, dass** die Dichtung (14) aus Naturkautschuk oder Synthesekautschuk, insbesondere aus Ethylen-Propylen-Dien-Monomer (EPDM) besteht.

11. Überschwemmungsschutzvorrichtung nach Anspruch 1, **dadurch gekennzeichnet, dass** der Querschnitt der Dichtung (14) aus zwei gleichschenkeligen Trapezen gebildet ist, die nebeneinander aneinanderstoßend angeordnet sind und zwischen ihren jeweiligen Scheitelpunkten einen Hohlraum (14a) aussparen.

12. Überschwemmungsschutzvorrichtung nach einem der vorstehenden Ansprüche, **dadurch gekennzeichnet, dass** sie mindestens zwei Tafeln (1, 1') umfasst, die angrenzend und koplanar angeordnet sind, die von einem vertikalen Profilelement (20) mit Querschnitt in "I"-Form getrennt sind, wobei die Seitenkanten (5b), die an diese Tafeln (1, 1') angrenzen, zwischen zwei jeweiligen Flügeln (20a) des Profilelements (20) derart aufgenommen sind, dass ihre jeweiligen seitlichen Dichtungselemente (14b) gegen die Seele (20b) des Profilelements (20) anliegen, wenn die Tafeln (1, 1') aufgeblasen sind und in der zu verschließenden Öffnung (3) an Ort und Stelle sind.

13. Überschwemmungsschutzvorrichtung nach Anspruch 14, **dadurch gekennzeichnet, dass** sie ein Profilelement (22) mit Querschnitt in "U"-Form umfasst, dessen Abstand der Flügel (22a) derart ist, dass diese Letzteren gegen den oberen Teil der Tafeln (1, 1') anliegen.

14. Überschwemmungsschutzvorrichtung nach einem der vorstehenden Ansprüche, **dadurch gekennzeichnet, dass** die Basis der Tafel (1) mindestens eine Schicht aus biegsamem Material (24) erhält, die einen ersten Teil (24a) umfasst, der mit einer Hauptfläche (5a) der Tafel fest verbunden ist, der außerhalb dieses durch einen zweiten Teil (24b) verlängert ist, der dazu bestimmt ist, auf dem Boden (16) anzuliegen, und dass, wenn die Basis der Tafel keine Haltefäden (7) umfasst, die Basis der Tafel mit Flüssigkeit, insbesondere Wasser, gefüllt ist.

## Claims

1. An anti-flooding device intended to seal an opening (3), in particular of a building, comprising at least one parallelepiped panel (1, 1') forming an inflatable chamber by injecting a gas, comprising two rectangular main walls (5a) joined by a lower edge (5c), an upper edge (5d) and two lateral edges (5b), in which:
- the inner faces of the main walls (5a) of the panel (1, 1') are connected to each other, at least on a part of their surface, by connecting elements of the same length (l) the ends of which are respectively secured to the main walls (5a) and which ensure that they are kept parallel when the panel (1, 1') is inflated,
- the lateral (5b) and lower (5c) edges of the panel (1) are provided, at least partially, with an elastic deformable seal (14) which is intended to be compressed respectively against the lateral walls (18) of the opening (3) and the base (16) thereof when the panel (1, 1') is inflated and installed in that opening,
**characterised in that** the connecting elements are made of holding threads (7) and **in that** the base of the panel (1) comprises a distribution density of the holding threads (7) lower than the distribution density in the rest of the panel, in particular said base does not comprise holding threads (7) over a height k of between five and twenty centimetres.

2. An anti-flooding device according to claim 1, **characterized in that** the holding threads (7) are formed by at least one bundle of elementary threads.

3. An anti-flooding device according to one of claims 1 or 2, **characterised in that** the tensile strength of the holding threads (7) is greater than the tensile force exerted on them by the main faces (5a) under the effect of the inflation pressure.

4. An anti-flooding device according to any one of the preceding claims, **characterised in that** the main walls (5a) of the panel (1) consist of a cloth (6) to which the holding threads (7) are fixed, at least one face of this cloth (6) being covered externally with a watertight coating (8).

5. An anti-flooding device according to any one of the preceding claims, **characterised in that** the main walls (5a) of the panel (1) are joined by a border (11) of a soft and watertight material forming the edges of the panel.

6. An anti-flooding device according to claim 5 **characterised in that** the border (11) is made in two parts, namely a border part (11a) forming the lower edge (5c) of the panel and a border part (11b) forming the lateral edges (5b) and the upper edge (5d) thereof.

7. An anti-flood device according to claim 6, **characterised in that** the lower corners (10) of the panel (1) formed by the border part (11a) forming the lower edge (5c) with the border parts (11b) respectively forming the lateral edges (5b) of the same are right angles.

8. An anti-flooding device according to claim 7, **characterised in that** the border part (11a) forming the lower edge (5c) of the panel and the border parts (11b) forming the lateral edges (5b) terminate contiguously in a "miter cut", each forming an angle (α) equal to 45° which is open to the inside.

9. An anti-flooding device according to any one of the preceding claims, **characterised in that** the seal (14) is made in three parts, namely a lower seal element(14c) which is fixed to the lower edge (5c) of the panel and two lateral seal elements (14b) which are fixed to the lateral edges (5b), these seal elements terminating in a "miter cut" each forming an angle (α) equal to 45° which is open to the inside.

10. An anti-flooding device according to any one of the preceding claims, **characterized in that** the seal (14) is made of natural rubber or synthetic rubber, and in particular of ethylene propylene diene monomer (EPDM).

11. An anti-flood device according to claim 1, **characterized in that** the right section of the seal (14) is formed by two isosceles trapezoids arranged side by side jointly, leaving a volume (14a) between their respective tops.

12. An anti-flooding device according to any one of the preceding claims, **characterized in that** it comprises at least two panels (1, 1') arranged adjacently, and coplanarly, which are separated by a vertical profiled element (20) with an "I"-shaped cross-section, the adjacent lateral edges (5b) of these panels (1, 1') being housed between two respective flanges (20a) of the profiled element (20) in such a way that their respective lateral seal element s (14b) are applied against the web (20b) of said profiled element (20), when the panels (1, 1') are inflated and in place in the opening (3) to be sealed.

13. An anti-flooding device according to claim 14, **characterized in that** it comprises a profiled element (22) with a "U"-shaped cross-section having two profile wings (22a) is such that the latter are applied against the upper part of the panels (1, 1').

14. An anti-flooding device according to any one of the preceding claims, **characterised in that** the base of the panel (1) receives at least one sheet of soft material (24) which comprises a first part (24a) attached to a main face (5a) of the panel which is extended externally to the latter by a second part (24b) intended to be applied to the ground (16), and **in that**, when the base of the panel does not include holding threads (7), the said base of the panel is filled with liquid, in particular water.
